# EUROPEAN PATENT SPECIFICATION

(11) **EP 1 223 830 B1**
(45) Date of publication and mention of the grant of the patent: **17.09.2003**
(21) Application number: 00964620.9
(22) Date of filing: 14.09.2000
(51) Int. Cl.: A46B 13/00, B60S 3/06

(54) **IMPROVED BRUSH FOR AUTOMATIC MOTOR VEHICLE WASHING AND/OR POLISHING SYSTEMS**
VERBESSERTE BÜRSTE FÜR AUTOMATISCHE SYSTEME ZUM WASCHEN UND/ODER POLIEREN VON KRAFTFAHRZEUGEN
BROSSE AMELIOREE DESTINEE A DES SYSTEMES AUTOMATIQUES DE LAVAGE ET/OU DE LUSTRAGE POUR AUTOMOBILES

(30) Priority: 28.10.1999 IT MI992260
(43) Date of publication of application: 24.07.2002
(73) Proprietor: FAVAGROSSA EDOARDO S.r.l., Roncadello di Casalmaggiore, (Cremona) (IT)
(72) Inventor: FAVAGROSSA, Francesco, I-46018 Sabbioneta (IT)
(74) Representative: Cicogna, Franco
(86) International application number: IT0000362
(87) International publication number: WO01030197

(56) References cited:
- EP-A- 0 524 153
- EP-A- 0 647 416
- DE-A- 19 646 783
- DE-C- 2 954 380
- US-A- 4 495 667
- US-A- 4 658 460
- US-A- 5 771 904

## Description

### BACKGROUND OF THE INVENTION

The present invention relates to an improved brush specifically designed for automatic motor-vehicle washing and polishing systems.

As is known, prior brushes used in automatic washing systems usually comprised a pair of vertically extending shafts and a horizontally extending shaft supporting a plurality of set length bristles provided for washing a motor vehicle surface upon turning the shafts.

In particular, the shafts are driven by an electronic control driving system designed for detecting a contact between the brush and motor vehicle, to emit a corresponding signal to which an immediate reaction must correspond.

The above mentioned construction, however, is affected by great drawbacks, occurring both upon starting and stopping the washing brush with the requirement of stopping the overall system for allowing the brush to perform its required movements.

Moreover, in the above prior construction, an excessive contact between the brush and motor vehicle can occur, with a consequent breaking problems at the projecting portions of the motor vehicle, such as the rear side mirrors and antenna assemblies.

A further problem is that the motor vehicle cannot be washed and polished in an optimum manner, and this mainly at difficultly accessible regions thereof.

The document US-A-4 658 460 to the same Applicant discloses a washing brush for motor vehicles formed by winding a single flexible bristle supporting element.

### SUMMARY OF THE INVENTION

Accordingly, the aim of the present invention is to overcome the above mentioned drawbacks, by providing an improved brush, specifically designed for automatic motor vehicle washing and/or polishing systems, which, as the brush starts to contact the motor vehicle surface, is adapted to transmit a progressive signal to an electronic control unit, thereby providing a more progressive operation threshold.

Within the scope of the above mentioned aim, a main object of the present invention is to provide such a brush allowing to better manage the starting operations thereof, thereby providing an optimum movement pattern, and this both with respect to vertical extending brushes and horizontally extending brushes, thereby preventing the 'advancing movement of the overall system from being stopped, with a consequent operating time reduction.

Yet another object of the present invention is to provide such a washing/polishing brush which is very reliable and safe in operation.

Yet another object of the present invention is to provide such an improved brush, specifically designed for motor vehicle washing and/or polishing . systems, which can be easily made starting from easily commercially available elements and materials and which, moreover, is very competitive from a mere economic standpoint.

According to one aspect of the present invention, the above mentioned aim and objects, as well as yet other objects, which will become more apparent hereinafter, are achieved by an improved brush, specifically designed for automatic motor vehicle washing and/or polishing systems, according to claim 1.

### BRIEF DESCRIPTION OF THE DRAWINGS

Further characteristics and advantages of the present invention will become more apparent hereinafter from the following detailed disclosure of a preferred, though not exclusive, embodiment of an improved brush specifically designed for automatic motor vehicle washing and/or polishing systems, being shown, by way of an indicative, but not limitative, example, in the accompanying drawings, where:

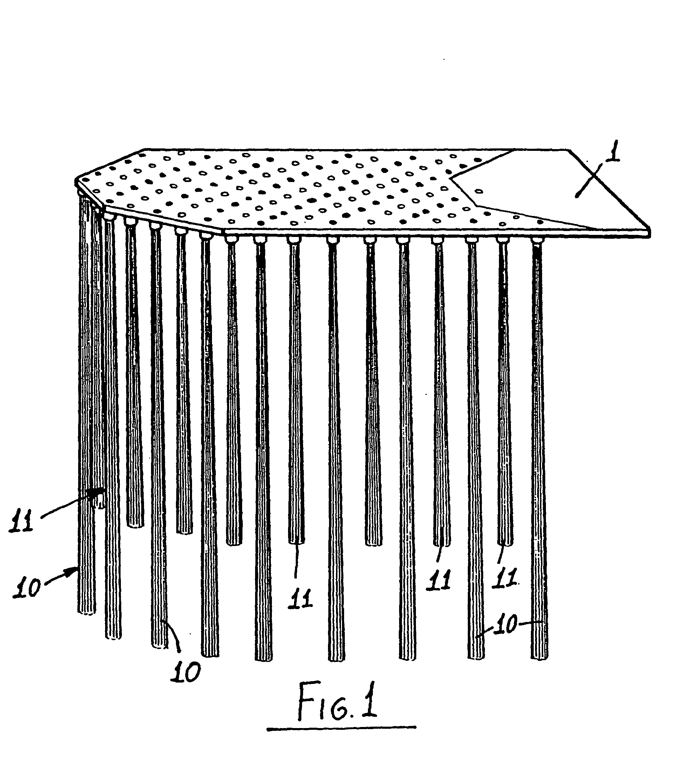

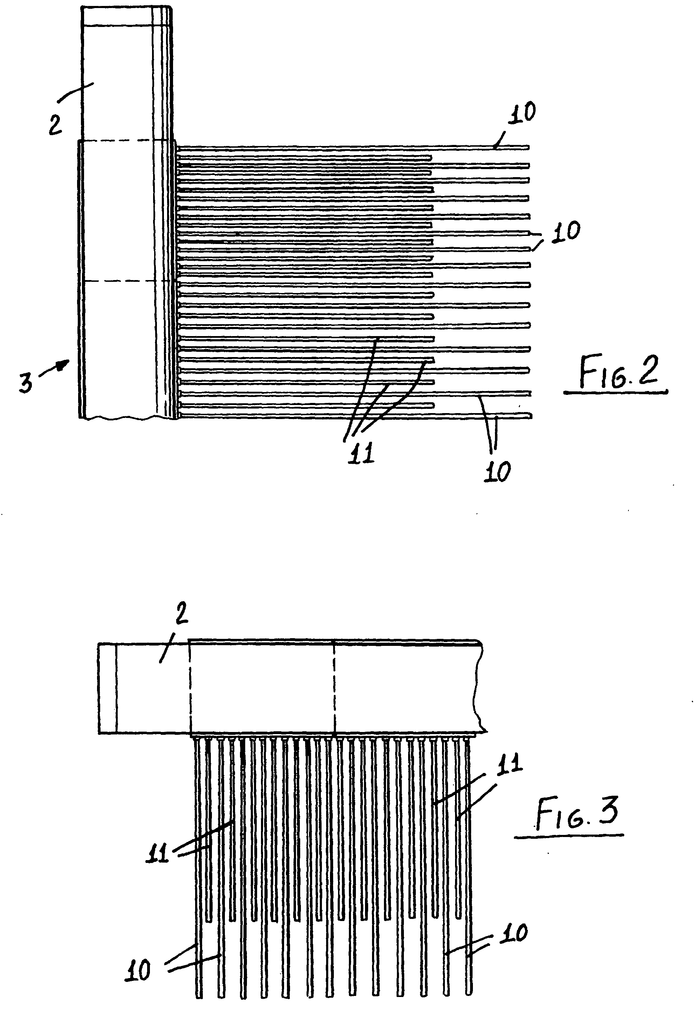

Figure 1 is a schematic perspective plan view of a bristle supporting layer and the related bristles;
Figure 2 is a schematic elevation view of a portion of a vertically extending shaft;
Figure 3 is a further schematic view illustrating a portion of a horizontally extending shaft;

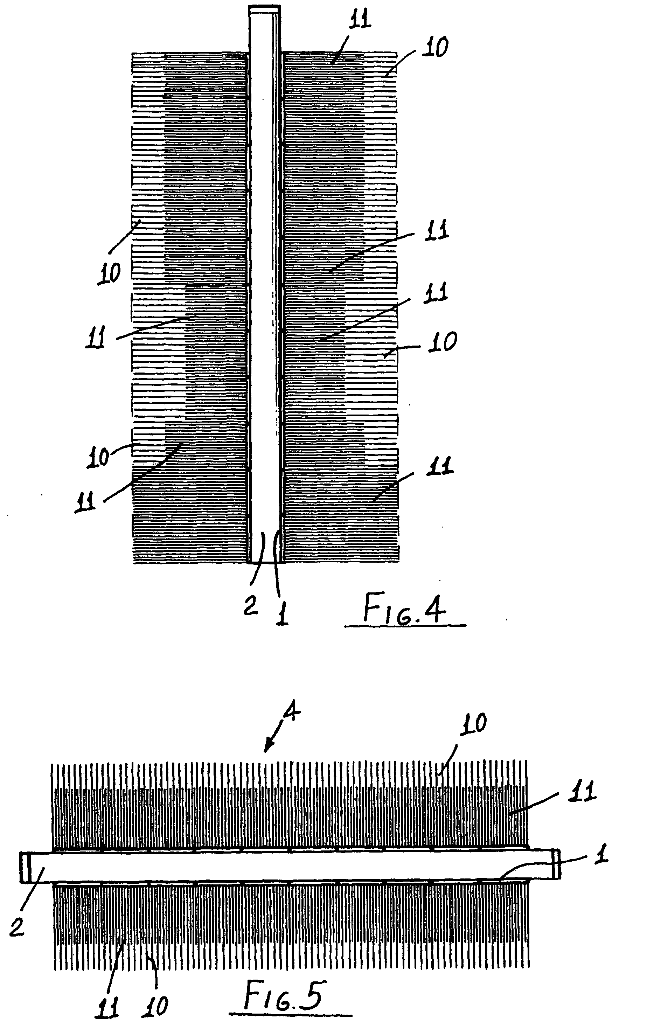

Figure 4 is a further schematic view illustrating a vertically extending shaft, and the bristles thereof;
Figure 5 is a further schematic view illustrating a horizontally extending shaft;
Figure 6 is a schematic plan view of a supporting element, the long bristles being shown in black color; and
Figure 7 is a further schematic view illustrating a washing/polishing system the inventive brush can be applied to.

### DESCRIPTION OF THE PREFERRED EMBODIMENTS

With reference to the number references of the above mentioned figures, the improved washing/polishing brush, specifically designed for automatic motor vehicle washing and/or polishing systems, according to the invention, comprises a bristle supporting element 1, thereon are supported a plurality of bristles, which are applied to a shaft 2, thereby providing both vertical brushes 3 and horizontal brushes 4, as conventionally used in conventional motor vehicle washing systems.

The main feature of the invention is that the bristles comprise a first plurality of long bristles 10, allowing to provide a brush body of a substantially cylindrical configuration and size.

Moreover, a second plurality of bristles 11 is provided, said bristles 11 having a differentiated length and being shorter than the long bristles 10, thereby providing, inward of the brush, a greater density of bristles.

In this connection it should be apparent that it would be also possible to provide several pluralities of short bristles having different lengths from one another, thereby providing a more progressive impact of the brush against the motor vehicle surface or body.

As schematically shown in Figure 7, a central control unit 20 is provided for driving or controlling the motor 21 provided for driving, in turn, both the vertical and horizontal shafts.

Said central control unit, in particular, would detect the variations of the current absorbed by the brush shaft driving motor, as the brush starts to contact the motor vehicle.

With the above disclosed brush arrangement, only a portion of the brush bristles will contact at the start the motor vehicle body.

Thus, to the central unit a much more progressive signal will be sent, which can be easily controlled, thereby allowing to better manage the shaft driving movements, and this owing to a softer and much more progressive message.

Thus, the brush operation threshold will be much more progressive and the start of the operation can be better controlled, thereby preventing any mechanical stresses from affecting the motor vehicle being washed, since the brush will better follow the motor vehicle body contour, and the system will not be stopped during the advancing operation thereof.

Thus, the provision of an outer cylindric configuration brush would allow to fit the brush to a lot of motor vehicle contours, through the overall surface of the motor vehicle, whereas, at the inner portions of the brush it is possible to provide differentiated length bristles, felts or the like, to allow the brush to be better driven and exploited, in order to encompass the overall motor vehicle body, before any operations of amperometric switches or the like.

Thus, the main feature is that the vertical brushes are made with different length bristles, felts or the like.

On same portions thereof, for example the bottom portion thereof, the vertical brush can be provided with bristles, felts or the like having the same length, whereas, at further regions arranged immediately above the mentioned portions, the brush can be provided with bristle, felt or the like bands having a different length, thereby providing an optimum contact with the motor vehicle.

Moreover, at a height corresponding to the curved portions of the motor vehicle as well as to the rear windows thereof, the subject brush comprises moreover bristles or felts having two, three or more different lengths, thereby making the bristles or felts of this vertical shaft portion much more flexible, to provide an optimum cleaning effect.

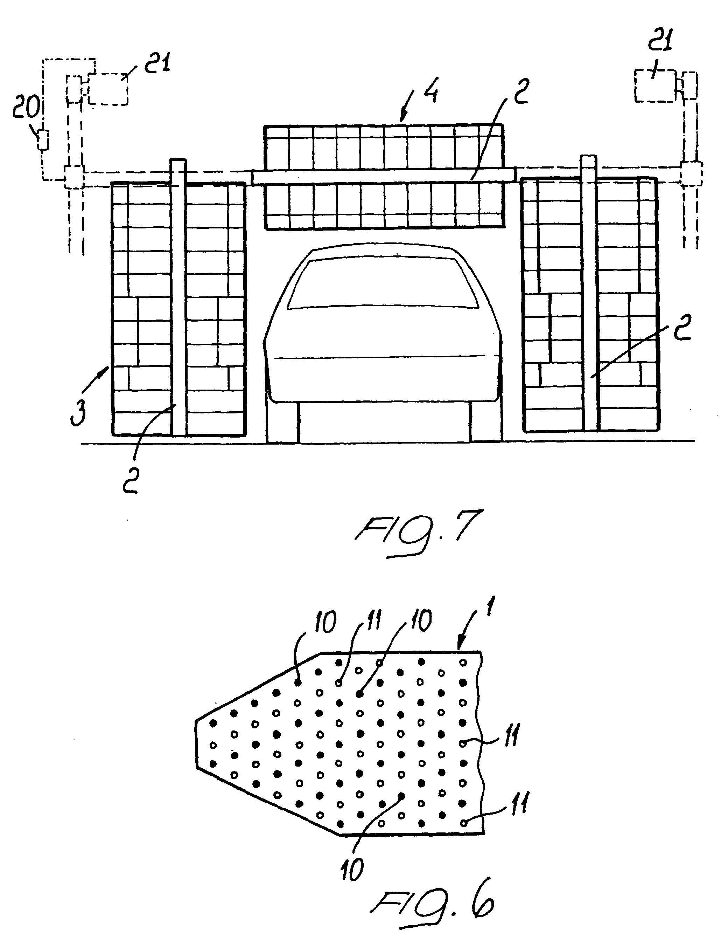

Furthermore, as schematically shown in Figure 6, the long bristles and short bristles are spaced from one another to provide a coil or spiralled pattern, having a very good efficiency in removing dirt from the motor vehicle body.

In such a case, the bristles or felts will practically provide a force component displacing outward the dirt, to provide, as stated, an optimum cleaning of the motor vehicle.

Furthermore, it would be possible to use bristles or'felts of equal cross-sections, as well as bristles or felts of different cross-sections, thereby further increasing the spiralling effect providing an optimum cleaning of the motor vehicle.

The present invention provides to apply to the mentioned supporting elements a plurality of bristles or felts or the like of different densities, depending on their different location on each shaft.

From the above disclosure it should be apparent that the invention fully achieves the intended aim and objects.

In particular, the fact is to be pointed out that the provision of a washing/polishing brush having an outer cylindric configuration, and being provided in its inside of a different density of bristles, allows to make the electronic drive of the brush movements softer and much more progressive.

## Claims

1. An improved brush, specifically designed for automatic motor vehicle washing and/or polishing systems, **characterized in that** said brush comprises a plurality of bristle supporting elements (1), for supporting bristles or felts (10, 11), said supporting elements being arranged adjoining one another and comprising each a first plurality of long bristles or felts (10) and at least a second plurality of short bristles or felts (11) having a length smaller than that of said long bristles or felts, said long bristles or felts (10) being alternately arranged with said short bristles or felts (11) and that said supporting elements (1) are coupled in an adjoining relationship to a shaft (2) so that said long bristles or felts define a cylindric configuration brush body.

2. A brush, according to Claim 1, **characterized in that** said brush.comprises, on a same supporting element (1), short bristles having different lengths.

3. A brush, according to Claim 1, **characterized in that** said long bristles (10) and short bristles (11) are arranged with an alternating arrangement to provide a spiral effect during a washing operation.

4. A brush, according to Claim 1, **characterized in that** all said bristles have the same cross section.

5. A brush, according to Claim 1, **characterized in that** said bristles have a different cross section.

6. A brush, according to Claim 1, **characterized in that** said brush comprises bristles of different densities depending on their different locations on each said shaft (2).

7. A brush, according to Claim 1, **characterized in that** said brush is designed for transmitting a signal to an automatic control unit for controlling driving motors for driving vertical extending brushes and horizontal extending brushes, and that the impact of said brushes against said motor vehicle is due at the start to only a. portion of the bristles forming said brush, thereby providing a softer signal which can be easily controlled.

## Patentansprüche

1. Verbesserte Bürste, insbesondere für automatische Systeme zum Waschen und/oder Polieren von Kraftfahrzeugen,
**dadurch gekennzeichnet, dass**
die Bürste eine Vielzahl von Borstenhalteelemente (1) zum Halten von Borsten oder Filzen (10,11) aufweist, wobei die Halteelemente benachbart zueinander angeordnet sind und jeweils eine erste Vielzahl von langen Borsten oder Filzen (10) und wenigstens eine zweite Vielzahl von kurzen Borsten oder Filzen (11) aufweisen, deren Länge geringer ist als diejenige der langen Borsten oder Filze, wobei die langen Borsten oder Filze (10) abwechselnd mit den kurzen Borsten oder Filzen (11) angeordnet sind, und **dass** die Halteelemente (1) in einer angrenzenden Beziehung mit einer Welle (2) verbunden sind, so dass die langen Borsten oder Filze einen Bürstenkörper mit zylindrischer Konfiguration bilden.

2. Bürste nach Anspruch 1,
**dadurch gekennzeichnet, dass**
die Bürste auf ein und demselben Halteelement (1) kurze Borsten mit unterschiedlichen Längen aufweist.

3. Bürste nach Anspruch 1,
**dadurch gekennzeichnet, dass**
die langen Borsten (10) und die kurzen Borsten (11) in einer abwechselnden Anordnung angeordnet sind, um einen Spiraleffekt während eines Waschbetriebs zu erzeugen.

4. Bürste nach Anspruch 1,
**dadurch gekennzeichnet, dass**
alle Borsten denselben Querschnitt aufweisen.

5. Bürste nach Anspruch 1,
**dadurch gekennzeichnet, dass**
die Borsten einen unterschiedlichen Querschnitt aufweisen.

6. Bürste nach Anspruch 1,
**dadurch gekennzeichnet, dass**
die Bürste Borsten mit unterschiedlichen Dichten abhängig von ihrer unterschiedlichen Anordnung auf der Welle (2) aufweist.

7. Bürste nach Anspruch 1,
**dadurch gekennzeichnet, dass**
die Bürste zum Übertragen eines Signals zu einer automatischen Steuereinheit zum Steuern von Antriebsmotoren zum Antreiben von sich in vertikaler Richtung erstreckenden Bürsten und sich in horizontaler Richtung erstreckenden Bürsten ausgebildet ist, und **dass** der Druck der Bürsten gegen das Kraftfahrzeug am Beginn nur für einige der Borsten wirksam ist, welche die Bürste bilden, wodurch ein sanftes Signal erzeugt wird, welches einfach steuerbar ist.

## Revendications

1. Brosse améliorée, spécifiquement étudiée pour des systèmes automatiques de lavage et/ou polissage de véhicules motorisés, **caractérisée en ce que** ladite brosse comprend plusieurs éléments de support (1) de poils, pour supporter des poils ou feutres (10, 11), lesdits éléments de support étant disposés les uns à côté des autres et comprenant chacun une première série de poils ou feutres longs (10) et au moins une seconde série de poils ou feutres courts (10) présentant une longueur plus petite que celte des poils ou feutres longs, lesdits poils ou feutres longs étant disposés de manière alternative avec les poils ou feutres courts (11) et **en ce que** les éléments de supports (1) sont couplés de manière proche à un arbre (2) afin que les poils ou feutres longs puissent définir un corps de brosse de configuration cylindrique.

2. Brosse selon la revendication 1, **caractérisée en ce que** ladite brosse comprend, sur le même élément de support (1), des poils courts présentant différentes longueurs.

3. Brosse selon la revendication 1, **caractérisée en ce que** les poils longs (10) et les poils courts (11) sont disposés avec une disposition en alternance afin de fournir un effet en spirale lors de l'opération de lavage.

4. Brosse selon la revendication 1, **caractérisée en ce que** tous lesdits poils présentent la même section transversale.

5. Brosse selon la revendication 1, **caractérisée en ce que** lesdits poils présentent une section transversale différente.

6. Brosse selon la revendication 1, **caractérisée en ce que** ladite brosse comprend des poils de densités différentes selon leurs différents positionnements sur chacun desdits arbres (2).

7. Brosse selon la revendication 1, **caractérisée en ce que** ladite brosse est étudiée pour transmettre un signal à une unité de contrôle automatique afin de contrôler les moteurs d'actionnement pour actionner les brosses s'étendant à la verticale et les brosses s'étendant à l'horizontal, et **en ce que** l'impact desdites brosses contre le véhicule motorisé est dû à l'actionnement d'une seule partie des poils formant ladite brosse, de ce fait foumissant un signal plus doux qui peut être facilement contrôlé.
